# EUROPEAN PATENT APPLICATION

(11) **EP 2 890 052 A1**
(43) Date of publication of application: **01.07.2015**
(21) Application number: 13382569.5
(22) Date of filing: 27.12.2013
(51) Int. Cl.: H04L 12/24, H04L 29/12

(54) **Method and system for dynamic network configuration and access to services of devices**

(71) Applicant: Telefonica S.A., 28013 Madrid (ES)
(72) Inventor: Matas Sanz, Primitivo, 28013 Madrid (ES); Tierno Sepulveda, Alfonso, 28013 Madrid (ES)
(74) Representative: Carpintero Lopez, Francisco

(57) **Abstract**

Present invention refers to a method and system for dynamic network configuration and access to services of devices belonging to uniquely defined domains in a plurality of networks served by a Central Configuration Server. The invention comprises: requesting for a network configuration or a network service; identifying the domain sending the request; in case of network configuration request, identifying, by the Central Configuration Server, previously set network parameters associated to the domain and the device; in case of network service request, checking an authorization, through an Authorization Authentications and Accessing node (AAA), and if the device is granted to access the network service, providing the network service; and sending the network parameters or authorization parameters to the device to be configured or to access the service.

## Description

### TECHNICAL FIELD OF THE INVENTION

Present invention generally relates to telecommunication networks and more specifically to the configuration of telecommunication networks and the access to services in certain environments of large scale multi-domain networks.

### BACKGROUND OF THE INVENTION

Nowadays, setup and configuration management in large scale networks is a relevant issue for devices hooked to Ethernet. Scalability's conflicts with dynamic flexibility arise because it is difficult to manage dynamic changes in a large number of machines concurrently. Also a manual configuration becomes impractical and unreliable.
To handle large numbers of network elements to be setup and configured dynamically, they are often grouped in different units that allow unambiguous identification, so different VLANs are created. VLANs create a division of the network into separate broadcast domains without latency problems. Setup and configure an environment such as described with multiple VLANs could be done providing each VLAN with its own configuration server, but this adds a lot of management and resource complexity. A single configuration server with a network interface in each VLAN, could be another solution, but is not a very effective and flexible, as every new VLAN requires a new cabling and extra network physical interface hardware.
In a network with multiple VLANs each one with its own Ethernet element group, the problem of managing with a single centralized dynamic server configuration is the broadcast packet traffic, typically used in configuration requests from clients. This traffic would not cross the domain of each VLAN to reach the server unit.

Several configuration protocols have been developed in order to link each client devices with the server related, but only relation between client and its own network, gateway to external link and some additional client related parameter are provide by the server.

Using a single Server, it is reasonable to use a Layer3 switch instead of a Layer2 model. That switch must be capable to route, or more accurately: re-route IP packets. An IP tool address tells the switch to forward certain types of broadcasts (like DHCP requests, DNS requests, TFTP requests and more) via "unicast" to the IP address configured (the Server Configuration address). That is known as Relay Agent.

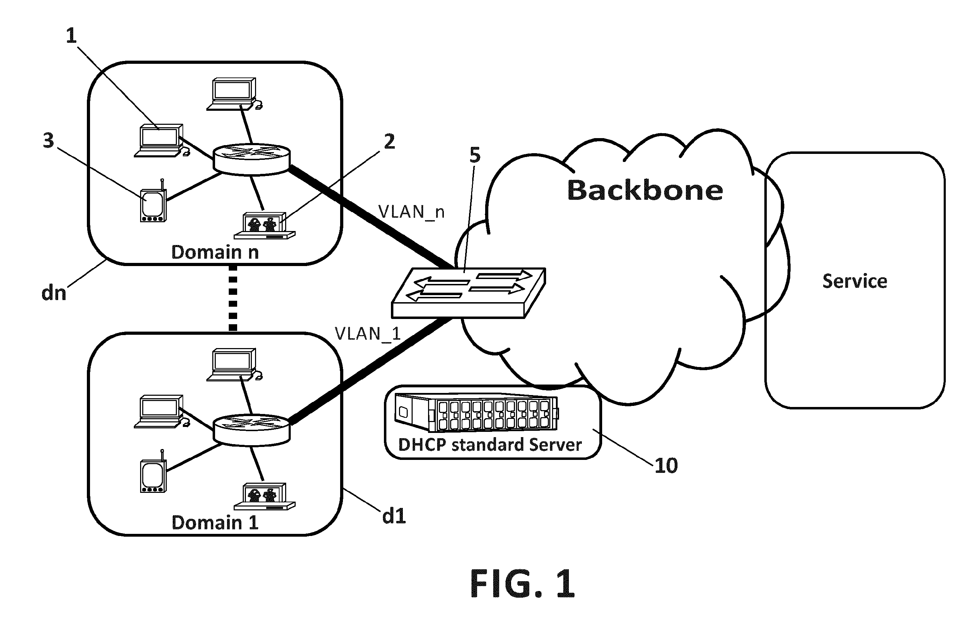

Figure 1 shows a typical large scale network, where the different devices (1, 3, 2) hooked to Ethernet (computer, TV, smart phones...) are grouped in domains (d1, d2, ...dn) and then route to a switch with Relay Agent (5). The switch allows send the setup messages to the configurations server, ensuring proper configurations for any devices, access to the backbone node from where it connects to outside world. Current Network configuration Servers from prior art, as DHCP server (10), might deal with such Relay Agent, defining each domain as a subnet or subset within the same network, thereof with a single administration manager. IP ranges in every subnet (domain) must be different with this approach. No solution is suggested regarding each domain as an independent network that can be configured regardless from others.

Network configuration relates to some standards from the prior art for conveying information between a client installed in a new device and the system which has a full knowledge of network deployment and arrangement in general. **Dynamic Host Configuration Protocol** (DHCP) is a client/server model protocol used to dynamically return configurations parameters to a DHCP Internet client, storing a key-value entry for each client, where the key is some unique identifier and the value contains the configuration parameters for the client. DHCP allows an automatic allocation (temporary or permanent) of reusable network addresses and additional configuration options. After obtaining parameters via DHCP, a client should be able to exchange packets with any other host in the Internet.

There are two concept DHCP protocol related to large scale networks:
- In large networks compose of several subnets each one on its own LAN, DHCP server and clients communicate through a **DHCP Relay Agent.** A DHCP relay agent is network device configured specifically to relay DHCP traffic to a nearby DHCP server. Relay agents are used to forward requests and replies between clients and servers when they are not on the same physical subnet. Relay agents receive DHCP messages from clients and then generate a new DHCP message to send out on another interface where the server is locates. The reply from the server is also forwarded back to the client.
- The new messages generate by the DHCP Relay Agent contains and additional **"relay agent information option"** (option 82) field in the packet before forwarding it to the DHCP server. The reply from the server is forwarded back to the client after removing this option 82. This parameter include information about the subnet (e.g. VLAN) where the client is locate and gives information to the Relay Agent in order to redirect the message from the server to the client.

For carrying authentication, authorization, and configuration information between a Network Access Server, hosted in a Network Access Control (NAC) module, which desires to authenticate its links and a shared Authentication Server, the protocol often used in the prior art is the well known Radius.

Networked devices, such as personal computers, printers, Internet gateways, Wi-Fi access points and mobile devices make use of a set of networking protocols known as UPnP (Universal Plug And Play), to seamlessly discover each other's presence on the network and establish functional network services for data sharing, communications and entertainment. Mainly for exchanging media information (audio/video/pictures), (UPnP AV), and for gateway control, called the Internet Gateway Device Protocol (IGD Protocol), that allows routers and firewalls to perform a variety of actions, including retrieving the external IP address of the device, enumerate existing port mappings, and add or remove port mappings.

The prior art provide some solutions for dynamic configuring relay agent and automatic DHCP servers discovering, as described in the patent US 7,882,169. Another solution, the Chinese application CN102355404, which copes the problem of dimensioning the IP range on subnets, allowing IP addresses distributions among subnets. i.e, when one subnet run out IP addresses, it takes automatically free addresses from other subnet. However all these solutions consider the net as a whole and do not allow configuring a subnet independently from each other.

Therefore, prior art is missing a solution for defining signalling information between devices into an independent network and a single centralized configuration Server, which would allow an independent management of each domain network with the corresponding benefits of flexibility, complexity or compatibility.

A new network element upon its insertion into the network system or upon its reactivation (initial node setup or reset) need to look at conveying information from the system network unit responsible which has a full knowledge of planning, deployment arrangement and network configuration. As it has been mentioned before, there are different protocols and systems which address this subject and the problem of allocation initial parameters to configure the IP address and its associated setting is usually performed by a DHCP server, through the associated protocol.

All the options presented refer to solutions for systems in which different domains are presented with several subnets within a common and unique network, so the assignment of configurations among several domains cannot be independent from each other, and the Administration has to be centralized. It cannot be assigned the same settings for different domains. So the administration must be centralized and a client cannot configure its own domain.

Current systems use the option of "Relay Agent" to define some options of the domain configuration, but always within the global limitation of the system. Thus for example a mobile clients defined by "manual allocation" in the configuration (IP address assigned to a MAC address), when it is changed the domain or scenario, the configuration would not change and would therefore not adapt dynamically to the new environment where it moves. In a service environment, this would imply that this mobile element could not access the services associated with the new domain.

It is not allowed a local administration in any of the existing protocols where each domain is configured independently within the limits set by a global administrator. Moreover in the present solutions, every change in a domain or subnet configuration affects the rest of the global network. Expanding elements in a domain or adding more domains may require the relocation of parameters in the rest of the network in order to maintain some consistency in the domain definition.

### SUMMARY OF THE INVENTION

Present invention solves the aforementioned problems by presenting a method for dynamic network configuration and access to services of devices belonging to uniquely defined domains in a plurality of networks served by a Central Configuration Server. The method comprises the steps of:
a) sending, from a device belonging to a uniquely defined domain to a Domain Identification Module, a first message, wherein the first message is requesting a network configuration or requesting for a network service;
b) identifying, by the Domain Identification Module, the domain which the first message belongs to;
c) sending, from the Domain Identification Module to the Central Configuration Server a second message containing the first message and a domain identification provided in the previous step;
d) in case of network configuration request, identifying, by the Central Configuration Server, previously set network parameters associated to the domain and the device, wherein network parameters of different domains can be identical.
e) in case of network service request, checking an authorization, through an Authorization Authentications and Accessing node (AAA) in communication with the Central Configuration Server, and if the device is granted to access the network service, sending a message containing authorization parameters to a Service Provider providing the network service;
f) sending a third message, from the Central Configuration Server to the Domain Identification Module, including the network parameters of step d) in case of a network configuration of the device, or including authorization parameters of step e) in case of requested network service for the device;
g) sending a fourth message, from the Domain Identification Module to the device, including the network configuration or the authorization parameters .

Additionally, according to one particular embodiment, present invention may further comprise modifying network parameters of a domain by an administrator of said domain, using a configuration interface, and being the modified network parameters of said domain independent from other domains served by the Central Configuration Server.

Two or more IP parameters, included in the network parameters of two or more devices belonging to different domains, may be identical according to one embodiment of the invention.

Referring to the network services, the present invention may include at least one of the following: port mapping service using UPnP IGD protocol or PCP protocol, video streaming service using DLNA.

Optionally, present invention may comprise, according to one embodiment, the steps of:
- adding a new device to a domain;
- defining a network configuration for the new device according to the network parameters set for the domain;
- the new device accessing to the allowed network services for this domain.

When a new domain is added to the plurality of networks, following one embodiment of the invention, a default network configuration is assigned to the new domain.

According to one embodiment of the invention where each device is identified by a key, said key may comprise a unique identifier assigned to the domain which the device belongs to and by an identification of the own device.

Network parameters may be selected from the following list: fix local IP address, subnet mask, ports internet access configuration, gateway, net mask, dns server address and network definition.

Another aspect of the invention refers to a system for dynamic network configuration of devices belonging to uniquely defined domains in a plurality of networks served by a Central Configuration Server. The system comprises:
- a Domain Identification Module, in communication with the Central Configuration Server, configured for receiving messages from the devices; identifying the domain which the messages belongs to; sending messages containing a domain identification to the Central Configuration server; and sending network configurations received from the Central Configuration Server to the devices;
- the Central Configuration Server configured for receiving messages from the Domain Identification Module; identifying previously set network parameters associated to domains and device; or for network service request, checking authorization for the requested network service using AAA, if granted informing to a Service Provider; and sending messages to the Domain Identification Module including the identified network parameters for a network configuration of the device or accessing to the requested network service .

The Central Configuration Server, according to one embodiment of the invention, may further comprise:
- an interface for modifying network configurations of domains and devices belonging to said domains;
- an interface for communicating with the Domain Identification Module;
- an interface for managing queries and access control to an AAA server;
- an interface for managing the communication with Service Providers.

An AAA (Authorization, Authentications and Accessing) server may be comprised by the present invention in one embodiment. The AAA server is in communication with the Central Configuration Server for checking rights of networks services and subscribed network services of devices.

A last aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

There are different points in the present invention which made it differential and advantageous. A new definition for key or identification of the clients installed in the devices is provided and the key for solving parameter and setup are primary based in the domain and after in the devices.
Configuration is defined as an independent network where devices receive different configurations parameters and services depending on the domain net where they connect. Thus, for example a user with a Wi-Fi tablet can use the services facilities of the net (home-domain) where it is connected.
The group administration can be performed in a distributed or local way. Any group has access to change parameters within own generic multi-network environment within the limits set by a generic administrator. The ID for any domain facilitates the identification of the device for the provision of services that require a subscription or authentication.
Any change into the provider net is fast and easily propagate. However, changes into individual defined network does not affect the rest of the global network and expanding elements in a domain does not require the relocation of parameters in the rest of the whole network in order to maintain some consistency in the domain definition.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1****.-** shows a typical large scale network, including a Relay Agent and a DHCP standard server.
**Figure 2****.-** shows a basic environment for the proposed invention.
**Figure 3****.-** shows a high-level diagram of the functionalities of one embodiment of the invention.
**Figure 4****.-** shows a particular embodiment of the invention in an Internet Services Providers environment.
**Figure 5****.-** shows a particular embodiment of the invention in an environment of multimedia on demand providers.
**Figure 6****.-** shows a particular embodiment of the invention where network services are shared in a multi-office building.

### DETAILED DESCRIPTION OF THE INVENTION

The invention describes a process for, in general terms, configuring a Network and Access to Services Dynamically in a multi-domain network (Multi-Network Dynamic Configuration System server), where information is conveyed between an Ethernet client, installed in a user device, and the server. Network parameters and access to services for many domains are configured using a central server and local administration is allowed.

A domain contains a group of devices integrated in a global net that can be accessed and administered with a common set of rules so that each node in the group is uniquely identified from a central server and a service supplying environment. Devices into different domains can have identical setting with different domain identification (ID). Unlike a subnet or private network, any device from a domain can access to external services in the global network without any address translations because is uniquely defined by its address and the domain ID.

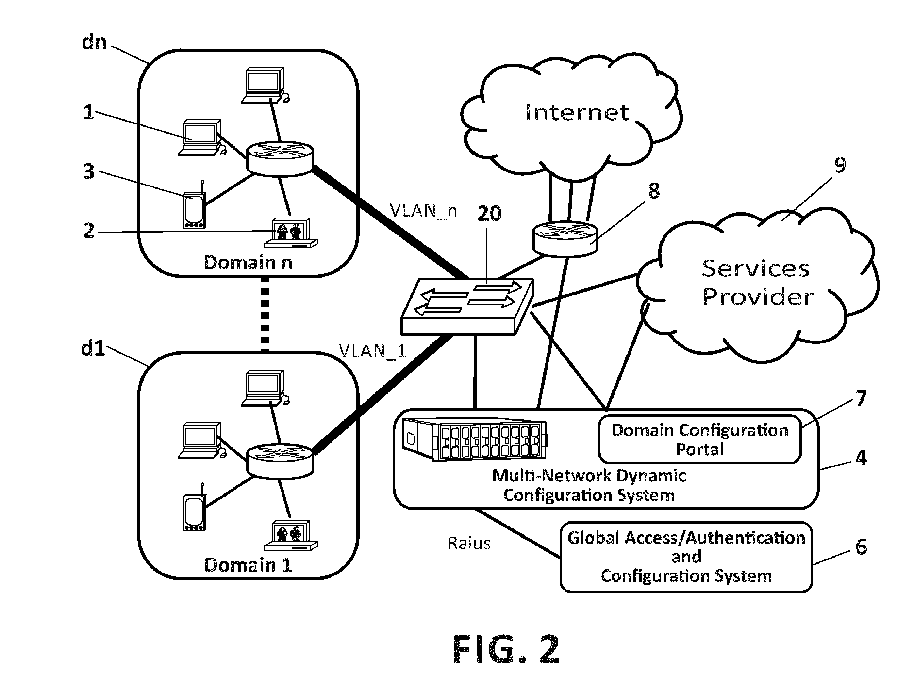

**Figure 2** shows a basic environment where the proposed invention would fit. Different devices hooked to Ethernet (computer (1), TV (2), smart phones (3)...) are grouped into several domains (d1,d2,...dn) and configured by the Multi-Network Dynamic Configuration System server (4). A key for identifying users devices are based in the domain which they belong and after in the own device identity (for example, MAC address). Then, each group is identified in a domain identification module (20) by its own key, that can be a tunnel identity (VLAN, QinQ, GRE, etc) or a Relay Agent switch (5) providing relaying agent parameters, forming an independent network, so that each client within domain can change the setup of its group and the services and facilities defined for it in the network backbone that connects.
The initial setup, parameter configurations, authentication and authorization information are given by the Network Access Control (NAC) module (6) (Global Access/Authentication and Configuration System). These initial configurations are related with the domain identification and could be modified, for example through a web portal (7) by a domain administrator, allowing a local management of the domain related.

Therefore, there are certain requirements to be met by the network environment in order to deployed present invention. Some embodiments of the invention start with the following assumptions:
- Every device hooked to Ethernet (computer (1), TV (2), smart phones (3)...) are grouped into several domains (d1,d2, ....dn) with an easily identification as a tunnel id (e.g. VLAN, QinQ, GRE) or Relaying Agent Information.
- Every domain is linked to the central configuration server (4) using a switch that propagates broadcast messages, as for example Relay Agent router in the case of DHCP or an Open Flow node.
- The central configuration server (4) is linked with a domain identification module (20) properly configured.
- Each domain is provisioned and initially configured on a Server Authentication and Access Control (6) in order to enabled external access from each group administrator.
- An interface and protocol is defined between the central configuration server and the NAT (8) (network address translation).
- An interface and protocol is defined between the central configuration server and the service providers (9).

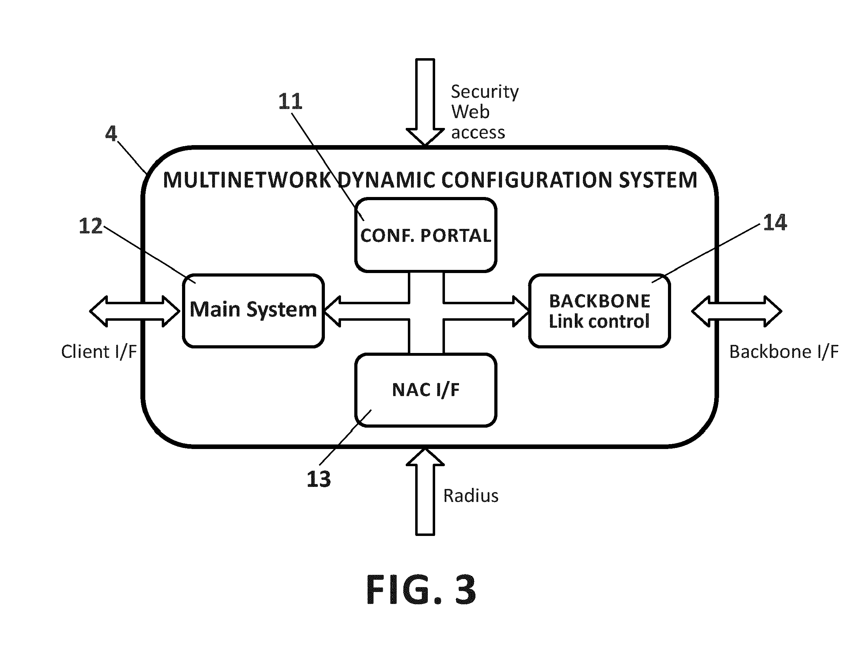

**Figure 3** shows a high-level diagram of the functionalities of one embodiment of the invention developed on the central configuration server, or Multinetwork Dynamic Configuration System, composed by the following blocks:
- A configuration portal (11) where each distributed network administrator may change and configure their own local parameters, such as fixed local IP addresses, subnet mask, ports internet access configurations, and so on. It authenticates devices by the domain origin and/or a password.
- A main block (12) which handles requests messages from different devices (clients) connected to the several domain networks, store these requests and their related parameters, check the validity of their access and control the time of the dynamic configuration provided to each associated device depending on the settings defined for each network requirement.
- A NAC (13) (Network Access Control) I/F, which performs queries and access control settings to the main block that distributes and update both this system authorization and related configuration baseline.
- A backbone link control (14), globalizing the interconnection with different Service Providers depending on the settings, such as access to specific services by subscription, or well defined by the administrator of each domain, such as setting external port connection.

These blocks handle specific parameters related with the domain where a device is integrated. The latter allows each domain does not have to be a subnet integrated into a broader network and each group can be considered as an own "network in a multi-network", configured by the central configuration server or MDCS.

The main block (12) scans packets coming from devices identifying them by their origin domain, assigning parameters associated with this domain taking in account the subscribed services of the domain. The most important functionality for this module is to allocate temporary or permanent network (IP) addresses and associated parameters (for example gateway, netmask, dns server address or network definition) to devices into each network, ensuring not to reallocate that address within the requested time into the same domain and attempts to return the same network address (IP) each time the client requests it.
Unlike a conventional DHCP server, the clients are identified by their domain origin and then by the client identifier (MAC address). Each domain can be created dynamically when the first request is received from this domain, and validated by the authentication control module. It allows Manual Allocation of IP address to concrete MAC, within a domain.
Other functionalities are allowing the Service Providers discovering. When a broadcast discover message is received, after checking that the user has rights to use this service, the main block configures the device with the address of the Service Providers and inform them about the new device for giving service. This Services may include, (but not limited) port mapping services (NAT servers) using UPnP IGD protocol or PCP protocol; video streaming servers using DLNA (UPnP AV).

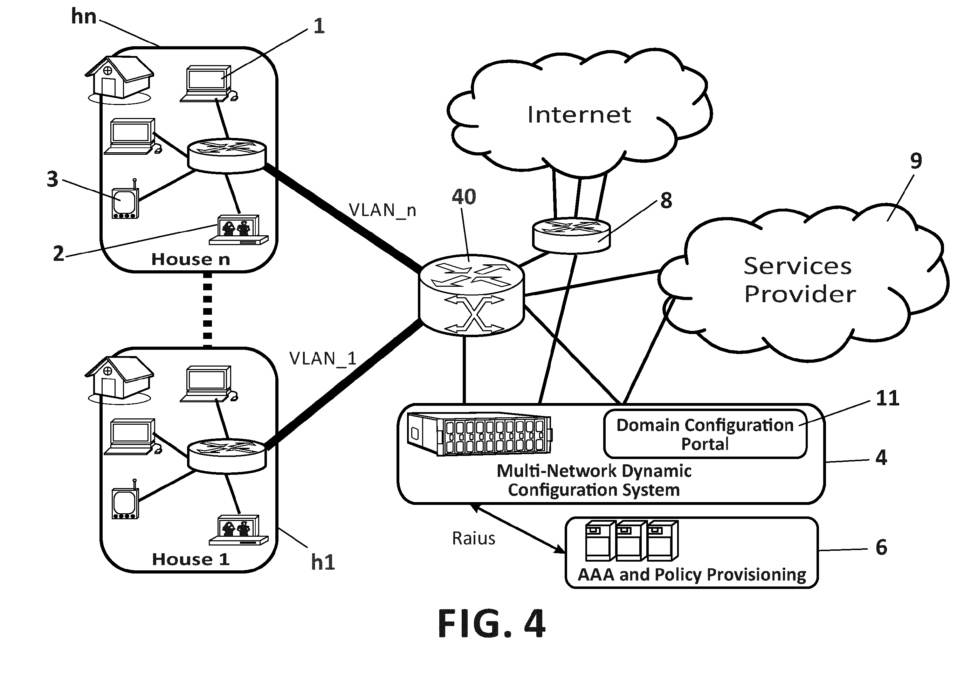

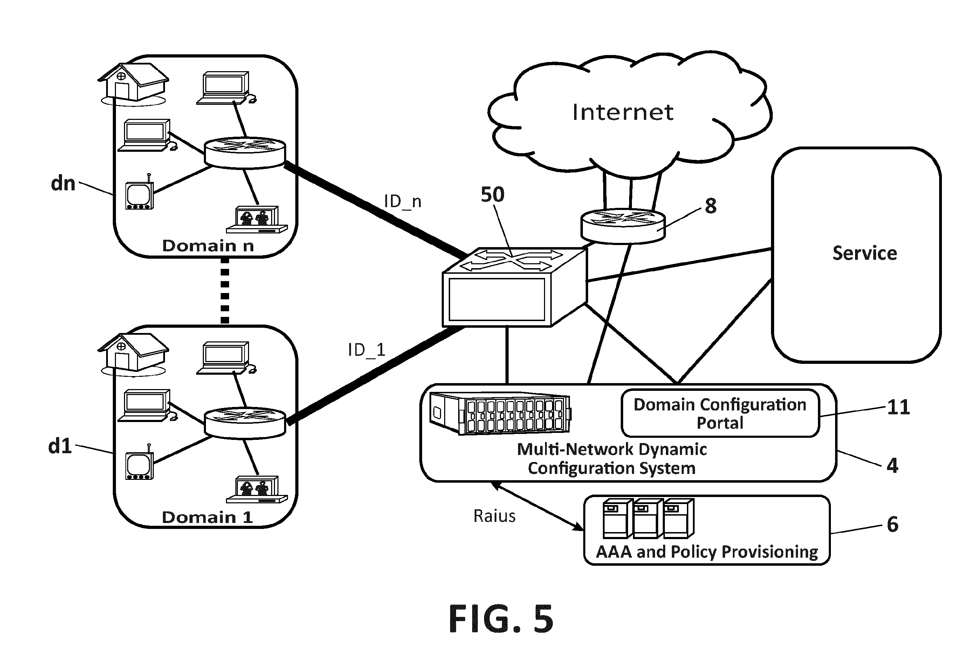

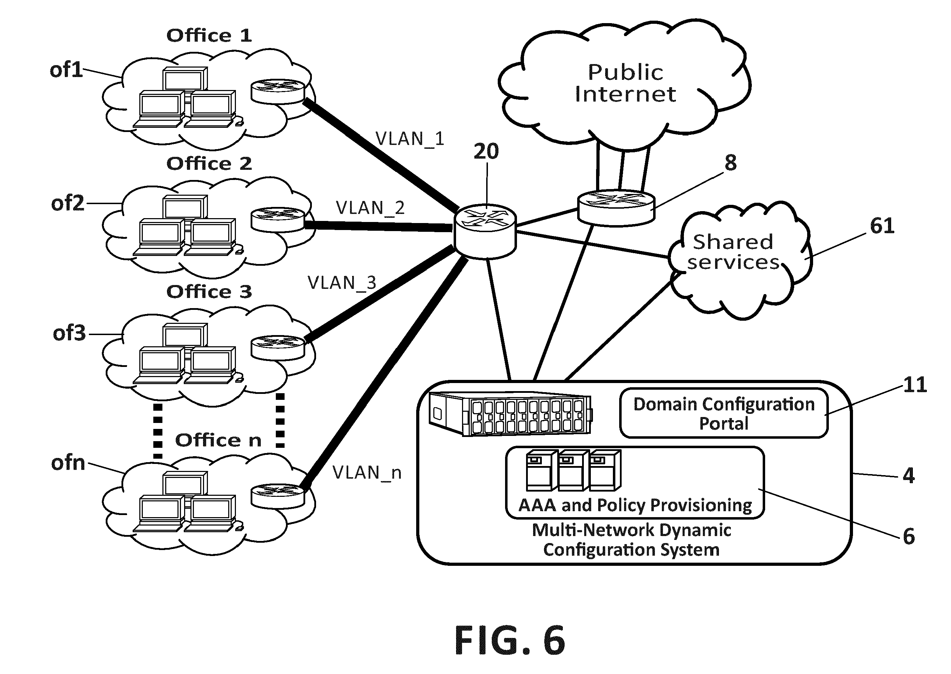

Some other particular embodiments of the invention are disclosed below attending to special environments where present invention may offer an improvement in the optimization for management of setup and configuration of large scale networks associated with different groups of connected devices that share access and services:
*1.-* *An Internet Services Providers environment* (ISP) serving a large group of households where the invention might be used, as shown in **Figure 4****.** That is a typical Internet Services Providers, where a lot of houses (h1, h2, ...hn) are connected via DSL or fibre to the network using a modem that implements also a Layer 2 switch. The broadband remote access server (BRAS) routes traffic to and from home devices and it is configured as a DHCP Relay Agent router (40) acting as a Domain Identification Module which identifies the domain where the traffic comes and then, it sends the domain identification to the MDCS. MDCS (4) serves DHCP clients and provide IP address configuration for all devices connected to the houses (1, 2, 3). Explicit Port Mapping is also managed by the MDCS, which communicates with the network NAT (8) or CG-NAT element to insert/deletes them.
   For this case, any home user administrator might change the parameters of server DHCP within its domain: IP Address range, fixed IP-MAC, port mapping to internet, etc, through the configuration portal. When the environment is configured by an identifier associated with each home, two users from different homes may have the same IP address range without affecting each other settings on the network, because the system propagates the configuration parameters according to this unique identifier.
   The turn on/off for any services is also managed by the device and related with its domain identification.
2.- *A multimedia on demand providers.* This scenario represented in **Figure 5** is similar to previous one, but in this embodiment the ISP also provides a subscription Video on Demand or Video Streaming services validates into the MDCS (4). In this case the domain is identified by QinQ VLAN tunnelling key. For properly propagate signalling messages, an Open Flow switch (50), acting as a Domain Identification Module, is configured for routing those specific messages to/from MDCS server. Apart from DHCP messages, MDCS deals also with UPnP discovering messages, where it announces the presence of the Video Streaming Service. When a domain net is active, MDCS checks if this domain is subscribed to this service, consulting to RADIUS (Global Access, Authentication and Configuration System). In this case it will announce the Video Streaming server to the hosts in the domain net. MDSC will configure the Video Streaming server to attend to any device inside this domain net.
3.- *A network services shared in a multi-office building.* This is represented in **Figure 6****,** an environment where a centralized control system can optimize the performance of a network is that of a building in which are installed independent offices (of1,of2, of3...ofn) and sharing the use of common services (61) (such as security and access control, energy and other services or storage management) might improve the individual office both in cost and optimization. In this case, the distributed management allows each office, setting up external accesses to both staff teleworker and guests. The MDCS (4) would control the initialization of clients from each office as well as access to internal common (printer, secure control, firewall...) and external (Ethernet) services. Distributed administrator control system is provided, so that each office can easily change its internal configuration.
   The configuration of external websites for each unit can be shared and even optimize access from the outside without changing the basic configuration of access

## Claims

1. Method for dynamic network configuration and access to services of devices belonging to uniquely defined domains in a plurality of networks served by a Central Configuration Server (4), the method is **characterized by** comprising the steps of:
a) sending, from a device (1,2,3) belonging to a uniquely defined domain (d1, ...dn) to a Domain Identification Module (20), a first message, wherein the first message is requesting a network configuration or requesting for a network service;
b) identifying, by the Domain Identification Module, the domain which the first message belongs to;
c) sending, from the Domain Identification Module to the Central Configuration Server a second message containing the first message and a domain identification provided in the previous step;
d) in case of network configuration request, identifying, by the Central Configuration Server, previously set network parameters associated to the domain and the device, wherein network parameters of different domains can be identical.
e) in case of network service request, checking an authorization, through an Authorization Authentications and Accessing node (6) (AAA) in communication with the Central Configuration Server, and if the device is granted to access the network service, sending a message containing authorization parameters to a Service Provider (9) providing the network service;
f) sending a third message, from the Central Configuration Server to the Domain Identification Module, including the network parameters of step d) in case of a network configuration of the device, or including authorization parameters of step e) in case of requested network service for the device;
g) sending a fourth message, from the Domain Identification Module to the device, including the network configuration or the authorization parameters .

2. Method according to any one of previous claims, further comprising modifying network parameters of a domain by an administrator of said domain, using a configuration interface, and being the modified network parameters of said domain independent from other domains served by the Central Configuration Server.

3. Method according to anyone of the previous claims wherein two or more IP parameters, included in the network parameters of two or more devices belonging to different domains, are identical.

4. Method according to any one of previous claims wherein the one or more network services including at least one of: port mapping service using UPnP IGD protocol or PCP protocol, video streaming service using DLNA.

5. Method according to any one of the previous claims further comprising:
- adding a new device to a domain;
- defining a network configuration for the new device according to the network parameters set for the domain;
- the new device accessing to the allowed network services for this domain.

6. Method according to any one of the previous claims wherein a new domain is added to the plurality of networks, further comprising assigning to the new domain a default network configuration.

7. Method according to anyone of the previous claims wherein each device is identified by a key, said key comprises a unique identifier assigned to the domain which the device belongs to and by an identification of the own device.

8. Method according to any one of the previous claims wherein network parameters are selected from the following list: fix local IP address, subnet mask, ports internet access configuration, gateway, net mask, dns server address and network definition.

9. System for dynamic network configuration of devices belonging to uniquely defined domains in a plurality of networks served by a Central Configuration Server (4), the system is **characterized by** comprising:
- a Domain Identification Module (20), in communication with the Central Configuration Server (4), configured for receiving messages from the devices; identifying the domain which the messages belongs to; sending messages containing a domain identification to the Central Configuration server; and sending network configurations received from the Central Configuration Server to the devices;
- the Central Configuration Server configured for receiving messages from the Domain Identification Module; identifying previously set network parameters associated to domains and device; or for network service request, checking authorization for the requested network service using AAA (6), if granted informing to a Service Provider; and sending messages to the Domain Identification Module including the identified network parameters for a network configuration of the device or accessing to the requested network service.

10. System according to claim 9 wherein the Central Configuration Server further comprising:
- an interface for modifying network configurations of domains and devices belonging to said domains;
- an interface for communicating with the Domain Identification Module;
- an interface for managing queries and access control to an AAA server;
- an interface for managing the communication with Service Providers.

11. System according to claim 9 further comprising an AAA server, in communication with the Central Configuration Server, for checking rights of networks services and subscribed network services of devices.

12. Computer program product comprising computer program code adapted to perform the method according to any of the claims 1-8 when said program code is executed on a computer, a digital signal processor, a field-programmable gate array, an application-specific integrated circuit, a micro-processor, a micro-controller, or any other form of programmable hardware.
